# EUROPÄISCHE PATENTSCHRIFT

(11) **EP 3 526 154 B1**
(45) Veröffentlichungstag und Bekanntmachung des Hinweises auf die Patenterteilung: **27.05.2026**
(21) Anmeldenummer: 17784160.8
(22) Anmeldetag: 05.10.2017
(51) Int. Cl.: B66C 23/68, B66C 23/90

(54) **VERFAHREN ZUR BESTIMMUNG EINER LAST, HYDRAULISCHE HEBEVORRICHTUNG ZUR AUSFÜHRUNG EINES SOLCHEN VERFAHRENS**
METHOD FOR DETERMINING A LOAD, HYDRAULIC LIFTING DEVICE FOR CARRYING OUT A METHOD OF THIS TYPE
PROCÉDÉ PERMETTANT DE DÉTERMINER UNE CHARGE ET DISPOSITIF DE LEVAGE HYDRAULIQUE SERVANT À METTRE EN OEUVRE UN TEL PROCÉDÉ

(30) Priorität: 14.10.2016 AT 5021316 U
(43) Veröffentlichungstag der Anmeldung: 21.08.2019
(73) Patentinhaber: Palfinger AG, 5101 Bergheim (AT)
(72) Erfinder: REISCHAUER, Richard, 5231 Schalchen (AT); SCHALBER, Alexander, 5081 Anif (AT); GRAML, Dominik, 5300 Hallwang bei Salzburg (AT)
(74) Vertreter: Torggler & Hofmann Patentanwälte - Innsbruck
(86) Internationale Anmeldenummer: PCT/AT2017/060250
(87) Internationale Veröffentlichungsnummer: WO 2018/068071

(56) Entgegenhaltungen:
- EP-A1- 1 477 452
- EP-A1- 2 489 625
- EP-A1- 2 982 635
- EP-A2- 0 353 099

## Beschreibung

Die Erfindung betrifft ein Verfahren zur Bestimmung einer von einer hydraulischen Hebevorrichtung angehobenen oder anzuhebenden Last mit den Merkmalen des Oberbegriffs des Anspruchs 1, eine zur Durchführung eines solchen Verfahrens ausgebildete Steuerung für eine hydraulische Hebevorrichtung sowie eine hydraulische Hebevorrichtung mit einer solchen Steuerung.

Ein gattungsgemäßes Verfahren zur Bestimmung einer von einer hydraulischen Hebevorrichtung angehobenen oder anzuhebenden Last ist aus der EP 1 477 452 B1 bekannt. Bei dem darin beschriebenen Verfahren für einen Kran mit handbetätigten oder hydraulischen Auslegerelementen wird zum Wiegen einer Last, die an einem manuellen Auslegerelement eines Krans angebracht werden soll, zunächst in einer Bemusterungsphase der Kran in eine vorbestimmte Position gebracht. Diese vorbestimmte Position kann zur Lastaufnahme geeignet sein. Daraufhin werden bei am Kran angebrachtem, handbetätigtem Auslegerelement Druckmessungen am Hauptzylinder für verschiedene, speziell zumindest zwei, Stellungen der hydraulischen Auslegerelemente zwischen vollkommen zurückgezogenen und vollkommen ausgefahrenen hydraulischen Auslegerelementen durchgeführt und daraus ein Musterdiagramm für diese vorgegebene Kranstellung erstellt. Diese Bemusterungsphase findet beim Kranhersteller statt.

In einer weiteren Phase wird eine an einem handbetätigten Auslegerelement angebrachte Last bestimmt. Dazu wird der unbeladene Kran in die vorgegebene, zur Lastaufnahme geeignete Position gebracht. Eine Druckermittlung im Hauptzylinder und ein Vergleich mit dem diese Position betreffenden Musterdiagramm liefert die Auslagerung des Anschlagpunktes der anzubringenden Last (Länge des Lastarms). Nach Anbringen der Last kann aus der Differenz zwischen dem erfassten Druck im unbeladenen und im beladenen Zustand des Krans die Last bestimmt werden.

Nachteilig an diesem im Stand der Technik bekannten Verfahren ist, dass die Bestimmung einer Last prinzipiell nur in einer vorbestimmten Position des Krans erfolgen kann. Vor Aufnahme einer Last muss der Kran in eine Position gebracht werden, für welche ein Musterdiagramm vom Kranhersteller aufgenommen wurde. Auch muss sich der Kran nach Aufnahme einer Last zur Bestimmung derselben in der entsprechenden Position befinden. Die Bestimmung einer Last kann zudem nur in der Konfiguration (Ausstattung) des Krans erfolgen, in welcher die Durchführung der Bemusterungsphase, also die Aufnahme eines Musterdiagrammes, durch den Kranhersteller erfolgt ist. Bei einer Abänderung der Krankonfiguration bzw. Kranausstattung kann es somit vorkommen, dass die vom Kranhersteller aufgenommenen Musterdiagramme nicht mehr zur Bestimmung einer Last herangezogen werden können.

Die EP 2 982 635 A1 offenbart ein Verfahren gemäß dem Oberbegriff des Anspruchs 1.

Aufgabe der Erfindung ist es, ein Verfahren zur Bestimmung einer von einer hydraulischen Hebevorrichtung angehobenen oder anzuhebenden Last anzugeben, bei welchem die zuvor genannten Nachteile nicht auftreten.

Diese Aufgabe wird durch ein Verfahren mit den Merkmalen des Anspruchs 1 und durch eine hydraulische Hebevorrichtung mit den Merkmalen des Anspruchs 16 gelöst. Vorteilhafte Ausführungsformen der Erfindung sind in den abhängigen Ansprüchen definiert.

Wie bei gattungsgemäßen Verfahren zur Bestimmung einer von einer hydraulischen Hebevorrichtung, beispielsweise in Form eines hydraulischen Ladekrans, angehobenen oder anzuhebenden Last wird die Hebevorrichtung zunächst in einer Referenzphase in eine Referenzstellung gebracht. Die Hebevorrichtung kann sich dabei in einem ersten Belastungszustand befinden.

Im Gegensatz zu im Stand der Technik bekannten Verfahren erfolgt jedoch bei dem erfindungsgemäßen Verfahren nun in der Referenzstellung der Referenzphase eine erste Erfassung der momentan auf die Hebevorrichtung wirkenden Kräfte und der momentanen Geometrie der Hebevorrichtung. Durch die Erfassung der momentan auf die Hebevorrichtung wirkenden Kräfte und der momentanen Geometrie der Hebevorrichtung kann die aktuelle Krankonfiguration bzw. Kranausstattung und die aktuelle Geometrie (Position), in welcher sich die Hebevorrichtung befindet, bei der Bestimmung einer angehobenen oder anzuhebenden Last berücksichtigt werden. So kann auch der momentane (erste) Belastungszustand der Hebevorrichtung mitberücksichtigt werden. In anderen Worten gesagt kann eine Bestimmung einer angehobenen oder anzuhebenden Last ausgehend von den gegenwärtig vorherrschenden Betriebsparametern der Hebevorrichtung ermöglicht werden. So können beispielsweise momentan im Betrieb vorherrschende Betriebsparameter der Hebevorrichtung als Ausgangspunkt zur Bestimmung einer angehobenen oder anzuhebenden Last erfasst werden.

Bei dem erfindungsgemäßen Verfahren folgt darauf eine Messphase, in welcher sich die Hebevorrichtung in einem zweiten Belastungszustand befindet und die Hebevorrichtung in eine Messstellung gebracht wird. In der Messstellung erfolgt eine zweite Erfassung der momentan auf die Hebevorrichtung wirkenden Kräfte und der momentanen Geometrie der Hebevorrichtung. Analog zur ersten Erfassung kann eine Bestimmung einer angehobenen oder anzuhebenden Last unter Einbeziehung der gegenwärtig vorherrschenden Betriebsparameter der Hebevorrichtung erfolgen.

In einer an die erste und zweite Erfassung der auf die Hebevorrichtung wirkenden Kräfte und der Geometrie anschließenden Vergleichsphase wird durch einen Vergleich der jeweiligen erfassten momentan auf die Hebevorrichtung wirkenden Kräfte und der jeweiligen erfassten momentanen Geometrie der Hebevorrichtung die angehobene Last charakterisiert. Da der Vergleich der erfassten Kräfte und der erfassten Geometrien (Positionen) auf jeweils momentan vorherrschenden Betriebsparameter basiert, lässt sich die angehobene bzw. anzuhebenden Last sehr genau charakterisieren. So kann beispielsweise die Messphase unmittelbar nach der Referenzphase durchgeführt werden, wodurch sich in der Vergleichsphase ergebende Differenzen der erfassten Kräfte direkt auf eine Veränderung des Belastungszustandes der Hebevorrichtung zurückführen lassen können, wobei auch Änderungen der jeweilig erfassten bzw. vorherrschenden Geometrie bei der Charakterisierung der Last berücksichtigt werden können.

Zur Bestimmung einer von der Hebevorrichtung angehobenen oder anzuhebenden Last ist man somit nicht auf eine vom Kranhersteller durchzuführende Bemusterungsphase und damit verbundenen, beschränkt anwendbaren Musterdiagrammen im Sinne des Stands der Technik angewiesen. Für den Kranhersteller selbst kann durch ein erfindungsgemäßes Verfahren die zeitaufwendige Durchführung einer Bemusterungsphase entfallen. Durch ein erfindungsgemäßes Verfahren können sich beispielsweise auch einfach Alterungs- und Verschleißerscheinungen der Hebevorrichtung bei der Bestimmung einer von der Hebevorrichtung angehobenen oder anzuhebenden Last berücksichtigen lassen.

Es soll nicht ausgeschlossen sein, dass eine Durchführung der Messphase im Wesentlichen beliebig oft nach Durchführung der Referenzphase erfolgen kann.

Erfindungsgemäß entspricht die Referenzstellung einer frei wählbaren Stellung der Hebevorrichtung.

Eine Durchführung des Verfahrens kann somit ausgehend von einer im Wesentlichen beliebigen Stellung der Hebevorrichtung erfolgen. Dadurch kann ermöglicht werden, dass die Hebevorrichtung speziell vor Durchführung der Referenzphase nicht in eine vorbestimmte Stellung gebracht werden muss.

Es kann grundsätzlich von Vorteil sein, dass die Messstellung einer Stellung der Hebevorrichtung nach einer Lastaufnahme oder einer Lastabgabe entspricht. Die Messstellung kann dabei einer Stellung der Hebevorrichtung unmittelbar nach Aufnahme oder Abgabe einer Last entsprechen. Die Messstellung kann auch einer Stellung der Hebevorrichtung entsprechen, welche sich durch eine (gegebenenfalls geringfügige) Stellungsänderung direkt nach einer Lastaufnahme oder einer Lastabgabe ergibt.

Es kann von Vorteil sein, dass die Messstellung einer an die Referenzstellung der Hebevorrichtung angenäherten Stellung der Hebevorrichtung entspricht. Dadurch können sich in der Vergleichsphase ergebende Differenzen der erfassten Kräfte großteils auf eine Veränderung des Belastungszustandes der Hebevorrichtung durch die angehobene bzw. anzuhebende Last zurückführen lassen. Änderungen der erfassten Kräfte aufgrund einer Änderung der Geometrie, beispielsweise bedingt durch eine Änderung der Auslagerung, können in diesem Fall einen geringeren Anteil liefern. Eine Annäherung der Messstellung an die Referenzstellung kann beispielsweise dadurch gegeben sein, dass die Hebevorrichtung zur Aufnahme oder Abgabe einer Last aus der Referenzstellung heraus bewegt wird und die Stellung der Hebevorrichtung dann zur Durchführung der Messphase zurück in Richtung der Referenzstellung gebracht wird.

Es kann vorteilhaft sein, dass die Messstellung der Hebevorrichtung im Wesentlichen der Referenzstellung entspricht. Dadurch können sich in der Vergleichsphase ergebende Differenzen der erfassten Kräfte im Wesentlichen auf eine Veränderung des Belastungszustandes der Hebevorrichtung durch die angehobene bzw. anzuhebende Last zurückführen lassen.

Es kann weiter vorteilhaft sein, dass die Referenzstellung einer an eine Zwischenstellung angenäherten Stellung entspricht, wobei die Zwischenstellung eine zur Lastaufnahme oder Lastabgabe geeignete Stellung der Hebevorrichtung ist. Dies kann von Vorteil sein, wenn beispielsweise die Stellung der Hebevorrichtung, in welcher eine angehobene Last bestimmt werden soll, nicht zur Lastaufnahme oder -abgabe geeignet ist. Dadurch kann auch ermöglicht werden, dass die Referenz- und auch die Messstellung von der zur Lastaufnahme oder Lastabgabe geeigneten Zwischenstellung entfernt sind.

Dabei kann vorteilhaft sein, dass die Überführung der Hebevorrichtung aus der Referenzstellung in die Zwischenstellung und die Überführung der Hebevorrichtung aus der Zwischenstellung in die Messstellung mit einer innerhalb eines Toleranzbereichs liegenden Stellungsänderung der Hebevorrichtung erfolgt. Bei Stellungsänderungen der Hebevorrichtung innerhalb des Toleranzbereichs kann es möglich sein, dass die in der Referenzphase erfassten Kräfte und die erfasste Geometrie weiterhin zur Bestimmung der angehobenen oder anzuhebenden Last in der Messphase herangezogen werden können. Es können also nach Durchführung der Referenzphase im Wesentlichen beliebige, innerhalb des Toleranzbereichs liegende Stellungsänderungen der Hebevorrichtung durchgeführt werden, ohne dass vor Durchführung der Messphase eine erneute Durchführung der Referenzphase nötig ist. Dabei kann bei Durchführung der Messphase die Messstellung auch innerhalb des Toleranzbereichs von der Referenzstellung abweichen.

Es kann von Vorteil sein, dass vor jeder Durchführung der Messphase zur Erfassung der im zweiten Belastungszustand momentan auf die Hebevorrichtung wirkenden Kräfte und der momentanen Geometrie der Hebevorrichtung eine Durchführung der Referenzphase zur Erfassung der im ersten Belastungszustand momentan auf die Hebevorrichtung wirkenden Kräfte und der momentanen Geometrie der Hebevorrichtung erfolgt. In anderen Worten gesagt ist vorgesehen, dass vor jeder Lastaufnahme oder Lastabgabe der Hebevorrichtung eine Durchführung der Referenzphase erfolgt. Eine Durchführung der Messphase kann nach Durchführung der Referenzphase im Wesentlichen beliebig oft erfolgen. Auch soll nicht ausgeschlossen sein, dass die Durchführung der Messphase nach einer innerhalb des Toleranzbereichs liegenden Stellungsänderung der Hebevorrichtung beliebig oft erfolgen kann.

Es kann vorgesehen sein, dass die Erfassung der momentan auf die Hebevorrichtung wirkenden Kräfte und der momentanen Geometrie der Hebevorrichtung unter Einbeziehung von für die jeweilige Stellung der Hebevorrichtung und den jeweiligen Belastungszustand der Hebevorrichtung charakteristischen Parametern und einem Berechnungsmodell erfolgt. Die charakteristischen Parameter können dabei mit den auf die Hebevorrichtung wirkenden Kräften und mit der Geometrie der Hebevorrichtung korrespondieren. In dem Berechnungsmodell können Informationen zur Hebevorrichtung, wie beispielsweise deren mögliche und auch gegenwärtige Konfiguration bzw. Ausstattung, hinterlegt sein.

Die Hebevorrichtung kann zumindest eine um eine vertikale Drehachse drehbare Kransäule und einen um eine erste horizontale Schwenkachse schwenkbar an der Kransäule gelagerten Hauptarm aufweisen. Weiter kann die Hebevorrichtung zumindest einen hydraulischen Hauptzylinder zum Verschwenken des Hauptarms aufweisen, wobei in der Referenzphase und der Messphase das Moment bezüglich der ersten horizontalen Schwenkachse erfasst wird. In einem einfachen Fall kann beispielsweise unter Einbeziehung des Schwenkwinkels und der Länge des Hauptarms sowie des im Hauptzylinder erfassten Drucks das Moment bezüglich der ersten horizontalen Schwenkachse bestimmt werden.

Bei der Hebevorrichtung kann weiter vorgesehen sein, dass diese ein Drehwerk zur Drehung der Kransäule und einen um eine zweite horizontale Drehachse schwenkbar am Hauptarm gelagerten Knickarm mit vorzugsweise zumindest einem Kranschubarm aufweist, wobei die Hebevorrichtung weiter einen ersten hydraulischen Knickzylinder zum Verschwenken des Knickarms und vorzugsweise zumindest einen ersten hydraulischen Schubzylinder zur Betätigung des zumindest einen Kranschubarms aufweist. Eine solche Ausbildung kann beispielsweise bei Ausbildung der Hebevorrichtung als Knickarmkran gegeben sein.

Bei der Erfassung der momentan auf die Hebevorrichtung wirkenden Kräfte und der momentanen Geometrie der Hebevorrichtung kann vorgesehen sein, dass die charakteristischen Parameter zumindest den Druck in dem zumindest einen Hauptzylinder und/oder den Druck im Knickzylinder und/oder den Drehwinkel des Drehwerks und/oder den Knickwinkel des Hauptarms zur Kransäule und/oder den Knickwinkel des Knickarms zum Hauptarm und/oder die Schubstellung des zumindest einen Kranschubarms umfassen. Durch eine geeignete Auswahl der charakteristischen Parameter können sich die Kräfte und die Geometrie vollständig und genau erfassen lassen.

Dabei kann weiter vorteilhaft sein, dass die Hebevorrichtung weiter einen um eine dritte horizontale Schwenkachse schwenkbar am Knickarm gelagerten Vorsatzknickarm mit zumindest einem Kranschubarm aufweist, wobei die Hebevorrichtung weiter zumindest einen zweiten hydraulischen Knickzylinder zum Verschwenken des Vorsatzknickarms und einen zweiten hydraulischen Schubzylinder zur Betätigung des zumindest einen Kranschubarms aufweist und die charakteristischen Parameter weiter den Druck im zweiten Knickzylinder und/oder den Knickwinkel der Vorsatzknickarms zum Knickarm und/oder die Schubstellung des zumindest einen Kranschubarms des Vorsatzknickarms umfassen. Eine solche Ausbildung kann beispielsweise bei Ausbildung der Hebevorrichtung als Knickarmkran mit Vorsatzknickarm gegeben sein. Dabei kann vorgesehen sein, dass in der Referenzphase und der Messphase das Moment bezüglich der ersten horizontalen Schwenkachse und das Moment bezüglich der dritten horizontalen Schwenkachse erfasst werden. Bei einer entsprechenden Erfassung der Geometrie kann die angehobene oder anzuhebende Last jedoch auch durch die alleinige Erfassung des Moments bezüglich der ersten horizontalen Schwenkachse bestimmt werden. Bei einer zusätzlichen Erfassung des Moments bezüglich der dritten horizontalen Schwenkachse kann es jedoch möglich sein, die angehobene oder anzuhebende Last genauer zu charakterisieren.

Weiter kann dabei vorteilhaft sein, dass die Hebevorrichtung weiter zumindest eine Auslegerverlängerung aufweist in dem Berechnungsmodell die zusätzliche Auslagerung der zumindest einen Auslegerverlängerung einbezogen wird. Zur Auslegerverlängerung relevante Daten können im Berechnungsmodell hinterlegt sein. Eine solche gegebenenfalls handbetätigte Auslegerverlängerung kann zur Erhöhung der Reichweite eines Kranarms bzw. Kranschubarms der Hebevorrichtung eingesetzt werden. Die Auslegerverlängerung kann unter einem vorgebbaren Winkel, beispielsweise mittels einer Verstelleinrichtung, an einem Kranarms bzw. Kranschubarm der Hebevorrichtung anordenbar sein.

Weiter kann dabei vorteilhaft sein, dass die Hebevorrichtung weiter zumindest ein an der Hebevorrichtung, insbesondere an einem Kranschubarm, angeordnetes Arbeitsgerät aufweist und in dem Berechnungsmodell die zusätzliche durch das Arbeitsgerät bedingte Belastung einbezogen wird. Ein Arbeitsgerät, wie beispielsweise eine Seilwinde, kann dabei an einer im Wesentlichen beliebigen Stelle der Hebevorrichtung angeordnet sein. Ein Arbeitsgerät, wie beispielsweise ein Greifer, kann aber auch an einem Kranschubarm der Hebevorrichtung angeordnet sein. Zu dem Arbeitsgerät relevante Daten können im Berechnungsmodell hinterlegt sein, dies ist aber nicht zwingend nötig. Durch die Erfassung der im ersten Belastungszustand momentan auf die Hebevorrichtung wirkenden Kräfte und der momentanen Geometrie der Hebevorrichtung kann das Arbeitsgerät und gegebenenfalls auch dessen Stellung an der bzw. zur Hebevorrichtung in der Bestimmung der angehobenen oder anzuhebenden Last berücksichtigt werden.

Es kann von Vorteil sein, dass in dem Berechnungsmodell die Verformung der Hebevorrichtung einbezogen wird. Eine durch das Eigengewicht und/oder die angehobene oder anzuhebenden Last hervorgerufene Verformung der Hebevorrichtung kann die tatsächliche Geometrie der Hebevorrichtung in einer Stellung bzw. einem Belastungszustand der Hebevorrichtung beeinflussen. Durch ein Einbeziehen der Verformung der Hebevorrichtung in dem Berechnungsmodell kann eine Bestimmung der angehobenen oder anzuhebenden Last genauer erfolgen.

Dabei kann vorteilhaft sein, dass in dem Berechnungsmodell die Verformung der Kransäule und/ oder des Hauptarms und/oder des Knickarms und/oder des zumindest einen Kranschubarm s der Hebevorrichtung einbezogen werden, wodurch sich die tatsächliche Geometrie der Hebevorrichtung in einer Stellung bzw. einem Belastungszustand der Hebevorrichtung besser charakterisieren lassen kann. Analog dazu kann ein Einbeziehen des Einflusses von Dichtungsreibungen der hydraulischen Zylinder eine genauere Bestimmung der angehobenen bzw. anzuhebenden Last erlauben.

Dabei kann vorteilhaft sein, dass in dem Berechnungsmodell die Verformung in Form einer Korrektur auf erfasste Knickwinkel und/oder in Form einer Korrektur auf erfasste Schubstellungen angewandt wird, und/oder der Einfluss der Dichtungsreibungen in Form einer Korrektur auf erfasste Drücke angewandt wird. Dadurch können sich beispielsweise die für eine bestimmte Stellung der Hebevorrichtung ergebende Verformung und der sich für einen bestimmten Belastungszustand bzw. auch für eine bestimmte Stellung einstellende Hydraulikdruck im Berechnungsmodell berücksichtigen lassen.

Weiter kann dabei vorteilhaft sein, dass die Korrektur in Abhängigkeit der erfassten momentan auf die Hebevorrichtung wirkenden Kräfte und/oder erfasste Knickwinkel und/oder der erfassten Schubstellungen erfolgt. Dadurch kann nicht nur eine stellungs- bzw. geometrieabhängige Verformung der Hebevorrichtung berücksichtigt werden, sondern dies (gegebenenfalls auch in Kombination) auch in Abhängigkeit der angehobenen bzw. anzuhebenden Last erfolgen. Auch kann die durch die Ausstattung bzw. Konfiguration der Hebevorrichtung bedingte Verformung berücksichtigt werden. In anderen Worten gesagt kann das Ausmaß der Korrekturen selbst in bestimmter Abhängigkeit der erfassten Parameter stehen.

Dabei kann weiter vorteilhaft sein, dass die Korrektur für die Verformung in linearer Abhängigkeit des erfassten Drucks und/oder in linearer Abhängigkeit der erfassten Schubstellung erfolgt und/oder die Korrektur für die Dichtungsreibungen invers proportional zum erfassten Druck und in Abhängigkeit einer Richtung einer Stellungsänderung erfolgt.

Es kann vorgesehen sein, dass der erste Belastungszustand einem Belastungszustand ohne eine von der Hebevorrichtung angehobene Last und der zweite Belastungszustand einem Belastungszustand mit angehobener Last entspricht. Die Referenzphase würde somit ohne eine angehobene Last durchgeführt werden und die Messphase nach erfolgtem Anheben einer Last durchgeführt werden.

Es soll jedoch nicht ausgeschlossen sein, dass erste Belastungszustand einem Belastungszustand mit einer ersten von Hebevorrichtung angehobenen Last und der zweite Belastungszustand einem Belastungszustand mit einer zweiten, vorzugsweise von der ersten abweichenden, angehobenen Last entspricht. Die Referenzphase würde somit beispielsweise mit einer bereits angehobenen Last durchgeführt werden und die Messphase nach teilweisem Abgeben oder zusätzlichem Aufnehmen einer Last erfolgen.

Wie bereits eingangs angeführt, wird auch Schutz für eine Steuerung für eine hydraulische Hebevorrichtung begehrt, welche zur Durchführung eines wie zuvor beschriebenen Verfahrens zur Bestimmung einer angehobenen oder anzuhebenden Last ausgebildet ist.

Von einer solchen Steuerung kann in einem ersten Betriebsmodus die Referenzphase in einem ersten Belastungszustand in der Referenzstellung der Hebevorrichtung zur ersten Erfassung der momentan auf die Hebevorrichtung wirkenden Kräfte und der momentanen Geometrie der Hebevorrichtung durchführbar sein.

In einem zweiten Betriebsmodus der Steuerung kann die Messphase in einem zweiten Belastungszustand in der Messstellung der Hebevorrichtung zur zweiten Erfassung der momentan auf die Hebevorrichtung wirkenden Kräfte und der momentanen Geometrie der Hebevorrichtung durchführbar sein. Die Steuerung kann beispielsweise derart ausgebildet sein, dass nach Durchführen der Referenzphase im ersten Betriebsmodus automatisch in den zweiten Betriebsmodus gewechselt wird. Auch kann beispielsweise vorgesehen sein, dass die Stellung der Hebevorrichtung im zweiten Betriebsmodus nur innerhalb des Toleranzbereichs veränderbar ist bzw. vor Verlassen des Toleranzbereichs ein entsprechendes Warnsignal durch die Steuerung ausgegeben wird.

In einem dritten Betriebsmodus der Steuerung kann die Vergleichsphase zur Charakterisierung der angehobenen Last durch einen Vergleich der jeweiligen erfassten momentan auf die Hebevorrichtung wirkenden Kräfte und der jeweiligen erfassten momentanen Geometrie der Hebevorrichtung durchführbar sein. Dabei kann beispielsweise vorgesehen sein, dass nach Durchführen der Messphase automatisch in den dritten Betriebsmodus gewechselt wird und gegebenenfalls auch die Vergleichsphase automatisch durchgeführt wird.

Dabei kann vorteilhaft sein, dass die in der Vergleichsphase charakterisierte Last in mit der Last korrespondierenden Einheiten an einer mit der Steuerung kommunizierenden Anzeige angezeigbar ist. Dadurch kann beispielsweise einem Benutzer in für diesen verständlichen Einheiten Auskunft über die durch das Verfahren bestimmte Last gegeben werden.

Schutz wird wie bereits angeführt letztlich auch für eine hydraulische Hebevorrichtung mit einer wie zuvor beschriebenen Steuerung begehrt. Die hydraulische Hebevorrichtung kann als Ladekran für ein Fahrzeug ausgebildet sein. Besonders vorteilhaft kann die hydraulische Hebevorrichtung als Knickarmkran ausgebildet sein.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt:
- Fig. 1a bis 1c: Seitenansichten verschiedener Ausführungen einer auf einem Fahrzeug montierten Hebevorrichtung,
- Fig. 2a bis 2c: Seitenansichten verschiedener Ausführungen einer Hebevorrichtung,
- Fig. 3a und 3b: Seitenansichten verschiedener Ausführungen einer Hebevorrichtung und jeweils eine schematische Darstellung einer Steuerung mit Sensorik,
- Fig. 4a bis 4c: eine schematische Darstellung eines Ablaufs eines Hebevorgangs,
- Fig. 5a bis 5c: eine weitere schematische Darstellung eines Ablaufs eines Hebevorgangs,
- Fig. 6a und 6b: eine weitere schematische Darstellung eines Ablaufs eines Hebevorgangs,
- Fig. 7a und 7b: schematische Darstellungen verschiedener Ausführungen einer Hebevorrichtung und jeweils eine Darstellung des Toleranzbereichs,
- Fig. 8a und 8b: schematische Darstellungen verschiedener Ausführungen einer Hebevorrichtung mit Auslegerverlängerung,
- Fig. 9a und 9b: schematische Darstellungen verschiedener Ausführungen einer Hebevorrichtung mit einem Arbeitsgerät und
- Fig. 10a und 10b: schematische Darstellungen verschiedener Ausführungen einer Hebevorrichtung mit jeweils einer an verschiedenen Positionen angeordneten Seilwinde.

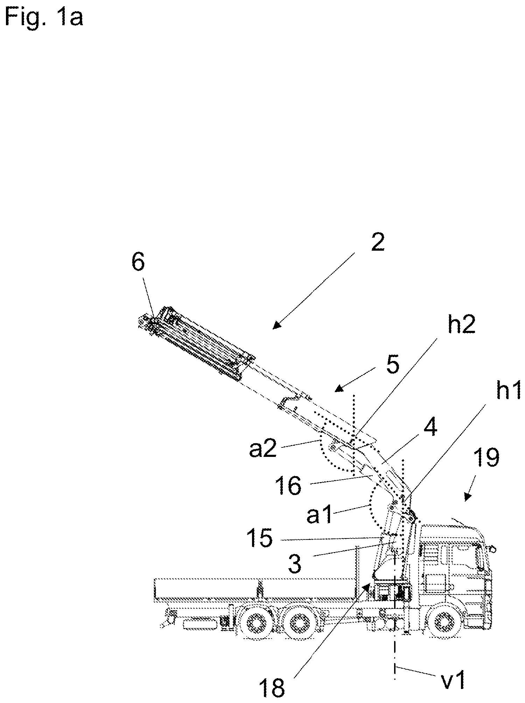

In Figur 1a ist eine erste Ausführung der Hebevorrichtung 2 gezeigt, wobei die Hebevorrichtung 2 als Ladekran bzw. Knickarmkran ausgebildet ist und auf einem Fahrzeug 19 angeordnet ist. Die Hebevorrichtung 2 weist wie gezeigt eine um eine erste vertikale Achse v1 mittels eines Drehwerks 18 drehbaren Kransäule 3, einen um eine erste horizontale Schwenkachse h1 schwenkbar an der Kransäule 3 gelagerten Hauptarm 4 und einen um eine zweite horizontale Schwenkachse h2 schwenkbar am Hauptarm 4 gelagerten Knickarm 5 mit zumindest einem Kranschubarm 6 auf. Zum Verschwenken des Hauptarms 4 relativ zur Kransäule 3 (Knickwinkel a1) ist ein hydraulischer Hauptzylinder 15 vorgesehen. Zum Verschwenken des Knickarms 5 relativ zum Hauptarm 4 (Knickwinkel a2) ist ein hydraulischer Knickzylinder 16 vorgesehen.

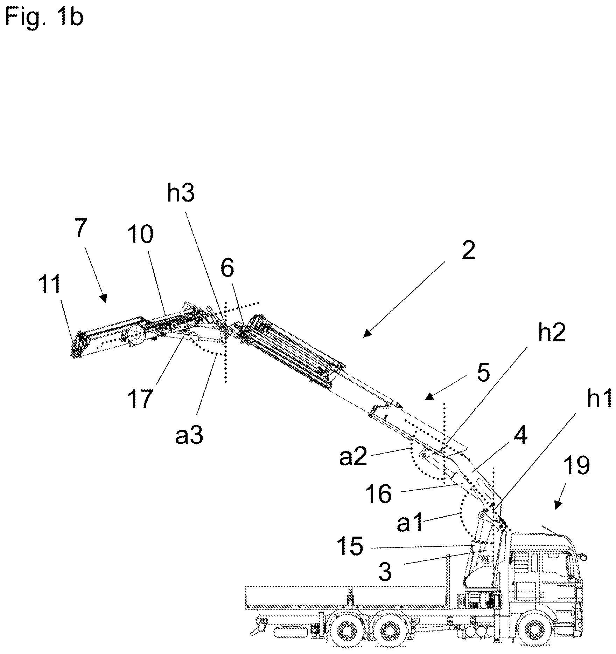

In Figur 1b ist eine zweite Ausführung der Hebevorrichtung 2 gezeigt, wobei die darin gezeigte Hebevorrichtung 2 zusätzlich zur Ausstattung der in Figur 1a gezeigten Ausführung einen um eine dritte horizontale Schwenkachse h3 schwenkbar am Kranschubarm 6 des Knickarms 5 angeordneten Vorsatzknickarm 7 mit einem Kranarm 10 und einem weiteren Kranschubarm 11 aufweist. Zum Verschwenken des Vorsatzknickarms 7 relativ zum Knickarm 5 (Knickwinkel a3) ist ein Knickzylinder 17 vorgesehen.

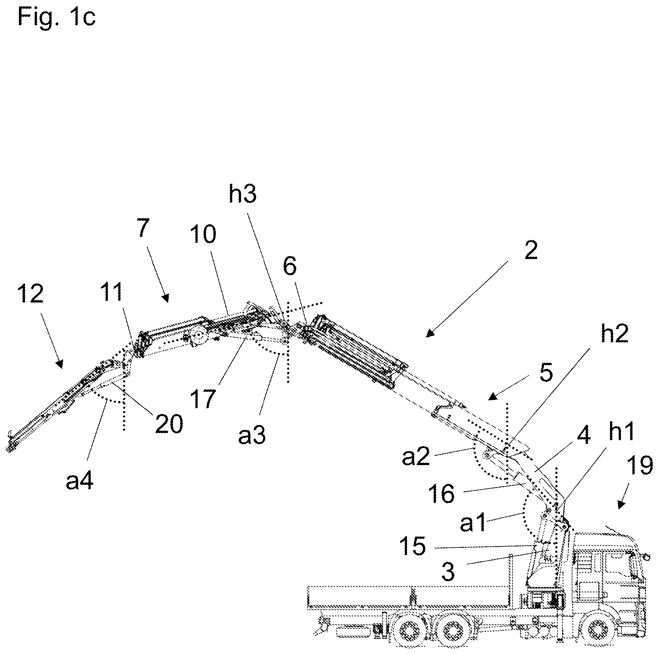

In Figur 1c ist eine dritte Ausführung der Hebevorrichtung 2 gezeigt, wobei die darin gezeigte Hebevorrichtung 2 zusätzlich zur Konfiguration der in Figur 1b gezeigten Ausführung einen weiteren um eine vierte horizontale Schwenkachse a4 schwenkbar am Kranschubarm 11 des Vorsatzknickarms 7 Vorsatzknickarm 12 aufweist. Zum Verschwenken des weiteren Vorsatzknickarms 12 relativ zum Vorsatzknickarm 7 (Knickwinkel a4) ist ein Knickzylinder 20 vorgesehen.

Alle gezeigten Ausführungen können selbstverständlich ein Drehwerk 18 aufweisen.

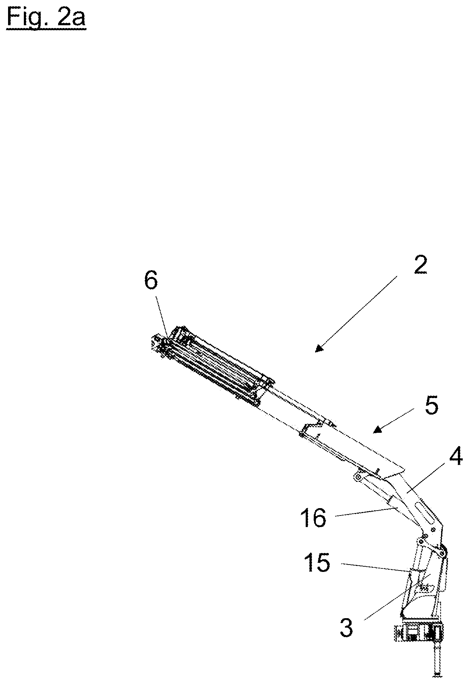

In den Figuren 2a bis 2c ist jeweils eine Detailansicht einer gemäß den Figuren 1a bis 1c ausgebildeten Hebevorrichtung 2 gezeigt.

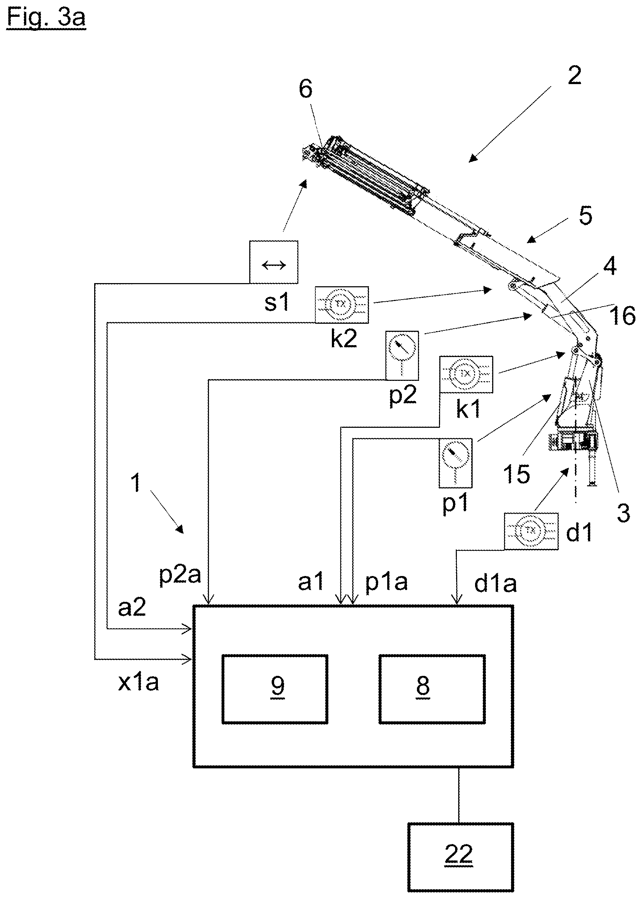

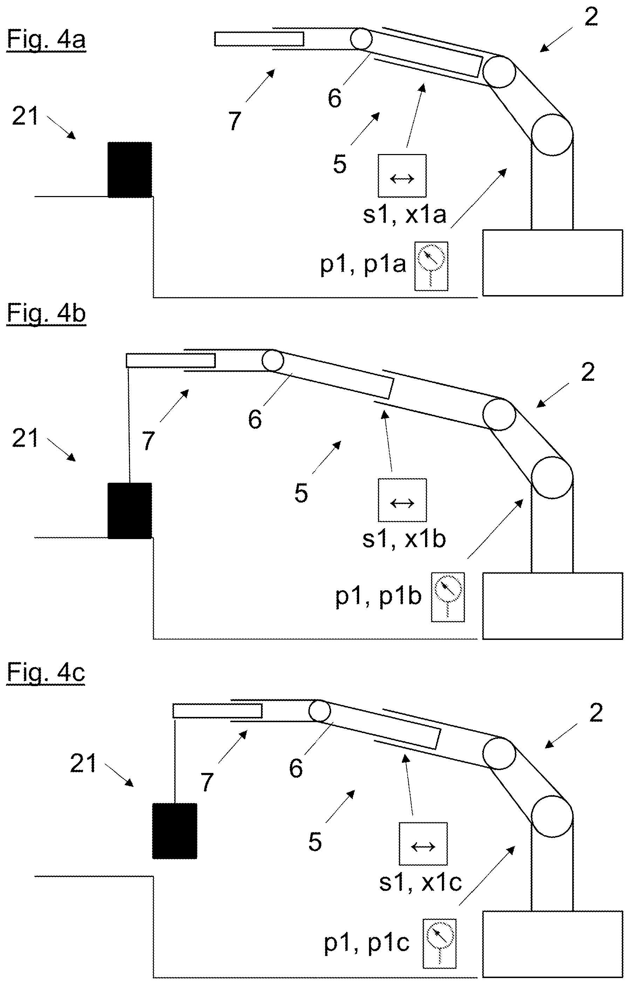

In Figur 3a ist eine Ausführung der Hebevorrichtung 2 gemäß der Figur 1a bzw. 2a gezeigt. Zudem ist eine schematische Darstellung einer Steuerung 1, welche zur Durchführung eines Verfahrens zur Bestimmung einer von der Hebevorrichtung 2 angehobenen oder anzuhebenden Last 21 (hier nicht dargestellt, siehe dazu beispielsweise Figuren 4, 5 oder 6) ausgebildet ist, gezeigt. Die Steuerung 1 verfügt über mehrere Signaleingänge, welchen Signale der der an der Hebevorrichtung 2 verbauten Sensorik zugeführt werden können. Weiter verfügt die Steuerung 1 über einen Speicher 9, in welchem beispielsweise Programmdaten zu Betriebsmodi und Berechnungsmodellen der Steuerung 1 sowie eingehende Signale gespeichert sein können, und über eine Recheneinheit 8, mit welcher eingehende Signale und im Speicher 9 abgelegte Daten verarbeitet werden können. Die Steuerung 1 kann auch mit einer Anzeige 22 kommunizieren. Eine Kommunikation der Steuerung 1 mit der Anzeige 22 kann kabelgebunden und/oder drahtlos erfolgen. Die Sensorik zur Erfassung der Geometrie der Hebevorrichtung 2 umfasst in der in Figur 3a gezeigten Ausführung einen Drehwinkelsensor d1 zur Erfassung des in der jeweiligen Drehwinkels d1a, einen Knickwinkelsensor k1 zur Erfassung des Knickwinkels a1 des Hauptarms 4 zur Kransäule 3, einen Knickwinkelsensor k2 zur Erfassung des Knickwinkels a2 des Knickarms 5 zum Hauptarm 4 sowie einen Schubstellungssensor s1 zur Erfassung der Schubstellung des Kranschubarm 6. Zur Erfassung der auf die Hebevorrichtung 2 wirkenden Kräfte ist ein Drucksensor p1 zur Erfassung des Hydraulikdrucks p1a im Hauptzylinder 15 und ein Drucksensor p2 zur Erfassung des Hydraulikdrucks p2a im Knickzylinder 16 vorgesehen.

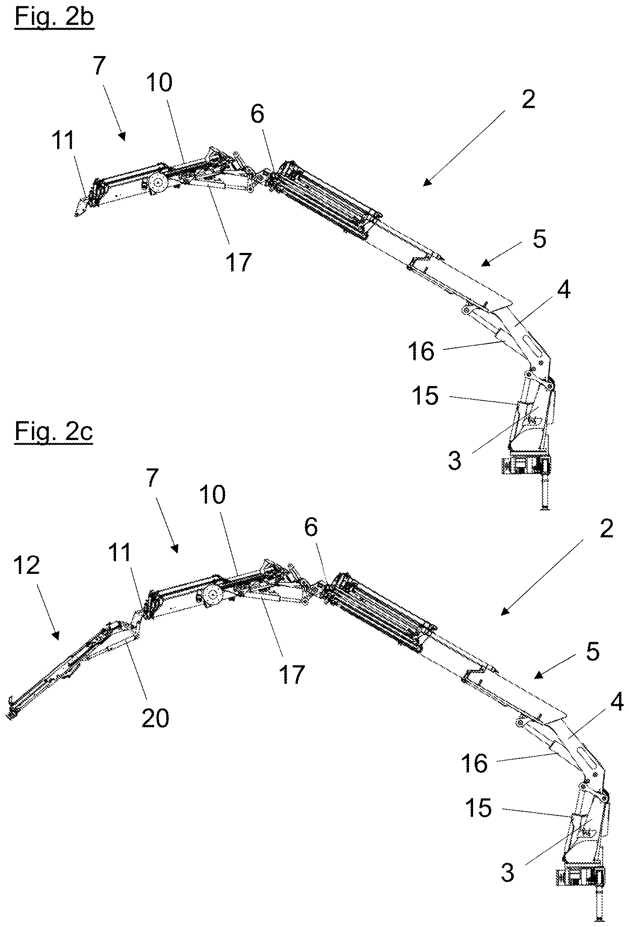

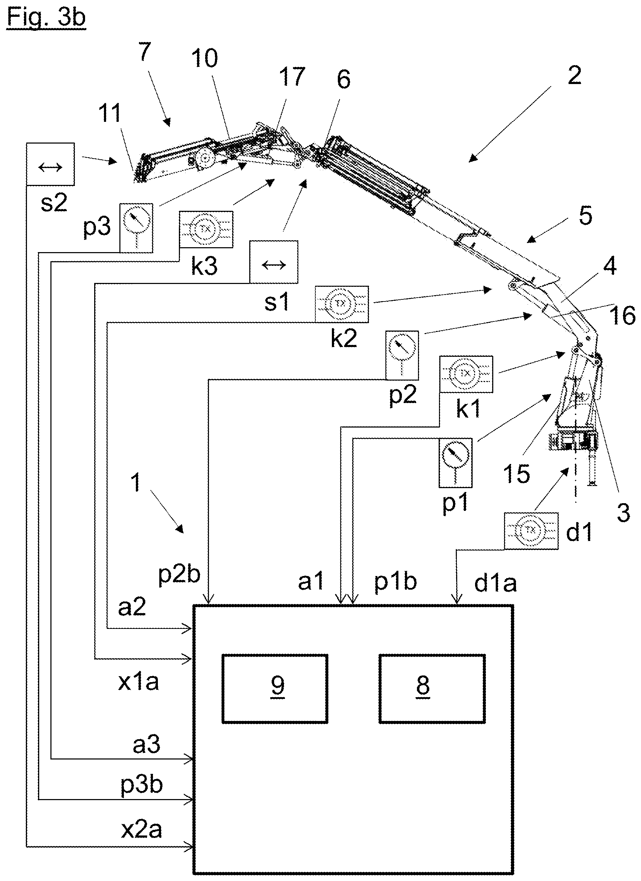

In Figur 3b ist analog zur Figur 3a eine Ausführung der Hebevorrichtung 2 gemäß der Figur 1b bzw. 2b gezeigt. Die Konfiguration der Hebevorrichtung 2 umfasst wie gezeigt einen am Kranschubarm 6 des Knickarm 5 angeordneten Vorsatzknickarm 7. Als zusätzliche Sensorik zur Erfassung von für den Belastungszustand der Hebevorrichtung 2 charakteristischen Parametern sind ein Knickwinkelsensor k3 zur Erfassung des Knickwinkels a3 des Vorsatzknickarms 7 zum Knickarm 5, ein Schubstellungssensor s2 zur Erfassung der Schubstellung des weiteren Kranschubarm 11 und ein Drucksensor p3 zur Erfassung des Hydraulikdrucks p3b im Knickzylinder 17 vorgesehen.

Eine analoge Ausführung der in den Figuren 3a und 3b gezeigten Anordnung aus einer Hebevorrichtung 2 gemäß der Figur 1c bzw. 2c und einer Steuerung 1 ist ebenso denkbar.

Bei einem wie zuvor beschriebenen Verfahren zur Bestimmung einer von der Hebevorrichtung 2 angehobenen oder anzuhebenden Last 21 ist diese gegenüber der Figur 3a zusätzliche Sensorik bei einer Ausbildung der Hebevorrichtung 2 mit einem Vorsatzknickarm 7 jedoch nicht zwingend notwendig, da sich (ggf. bei bekannter Auslagerung des Vorsatzknickarms 7) prinzipiell mit einer Bestimmung des Moments bezüglich der ersten horizontalen Schwenkachse h1 die angehobene oder anzuhebenden Last 21 bestimmen lassen kann. Die zusätzliche Sensorik und die Berücksichtigung der von dieser gelieferten Messwerte bzw. Parameter, insbesondere eine damit mögliche zusätzliche Bestimmung des Moments bezüglich der dritten horizontalen Schwenkachse h3, kann jedoch zu einer erhöhten Genauigkeit der Bestimmung (Messgenauigkeit) beitragen.

In den Figuren 4a bis 4c ist ein Ablauf einer Lastaufnahme (bzw. in umgekehrter Reihenfolge der Ablauf einer Lastabgabe) durch die Hebevorrichtung 2 gezeigt. Die in Figur 4a gezeigte Stellung der Hebevorrichtung 2 kann dabei der Referenzstellung entsprechen, wobei eine im Wesentlichen frei wählbare Stellung der Hebevorrichtung 2 als Referenzstellung dienen kann. Von den für den Belastungszustand der Hebevorrichtung 2 charakteristischen Parametern werden im dargestellten Verlauf der Lastaufnahme lediglich die vom Schubstellungssensor s1 gemessene Schubstellung des Knickarms 5 und der vom Drucksensor p1 gemessene Hydraulikdruck im Hauptzylinder 15 betrachtet. In der Referenzstellung werden die erste Schubstellung x1a des Kranschubarms 6 und der erste Hydraulikdruck p1a gemessen und im Speicher 8 der Steuerung 1 (nicht dargestellt) abgelegt. Die Steuerung 1 weist dazu einen ersten Betriebsmodus zur ersten Erfassung der momentan auf die Hebevorrichtung 2 wirkenden Kräfte und der momentanen Geometrie der Hebevorrichtung 2 auf.

Aus der Referenzstellung wird die Hebevorrichtung nun durch eine Geometrieänderung, hier durch ein Ausfahren des Kranschubarm 6 des Knickarms 5 in die zweite Schubstellungen x1b, in die Zwischenposition gebracht. Die Zwischenposition eignet sich wie dargestellt zur Aufnahme der Last 21. Grundsätzlich ist es selbstverständlich auch möglich, dass die in der Figur 4b gezeigte Stellung der Hebevorrichtung 2 (vor Anheben der Last 21) als Referenzstellung dient. In der Zwischenstellung wird die zweite Schubstellung x1b des Kranschubarms 6 und der zweite Hydraulikdruck p1b gemessen und ebenfalls im Speicher 8 der Steuerung 1 (nicht dargestellt) abgelegt. Dies kann allgemein für alle Hebevorgänge in einer Zwischenphase, in welcher sich die Steuerung 1 in einem dafür geeigneten Betriebsmodus befindet, erfolgen. In der Zwischenstellung wird nun die Last 21 an der Hebevorrichtung 2 angeschlagen und gegebenenfalls auch angehoben. Prinzipiell kann bereits jetzt eine Bestimmung der angehobenen Last 21 erfolgen.

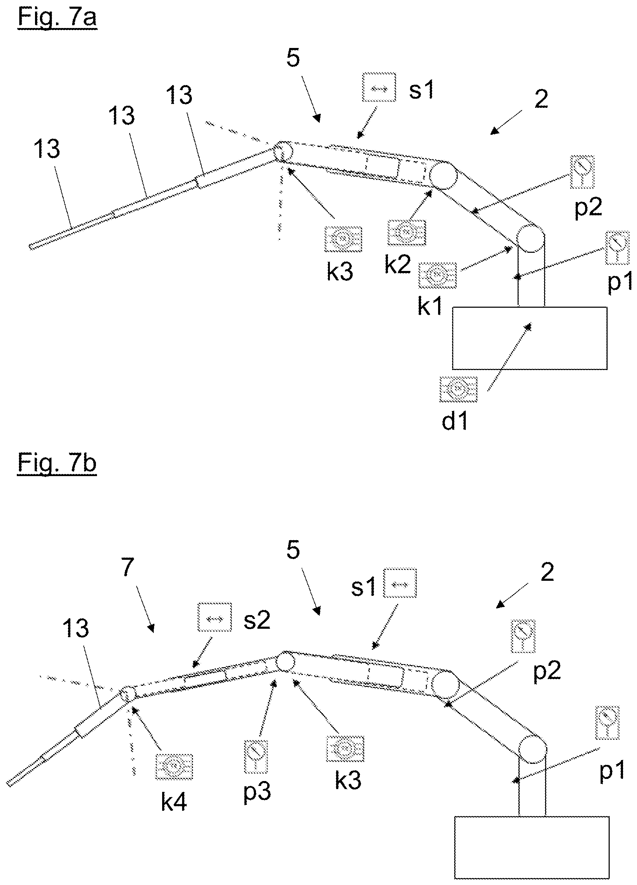

Aus der Zwischenstellung wird die Hebevorrichtung 2 durch eine Geometrieänderung, hier nach Anheben der Last 21 durch ein Einfahren des Kranschubarm 6 in die dritte Schubstellungen x1c, in die Messstellung gebracht. Die Messstellung ist wie gezeigt an die Referenzstellung angenähert. Dabei kann vorgesehen sein, dass eine Stellungs- bzw. Geometrieänderung der Hebevorrichtung 2 innerhalb eines Toleranzbereichs liegen muss, um die in der Referenzphase erfassten charakteristischen Parameter für die momentan auf die Hebevorrichtung 2 wirkenden Kräfte und die momentane Geometrie der Hebevorrichtung 2 zur Bestimmung der angehobenen Last 21 heranziehen zu können. Der Toleranzbereich kann dabei für eine maximal zulässige Schubstellungsänderung und/oder eine maximal zulässige Knickwinkeländerung gelten (siehe beispielsweise Figuren 7a und 7b).

In Figur 4c befindet sich die Hebevorrichtung 2 nach Anheben der Last 21 in der Messstellung. In der Messstellung werden nun die dritte Schubstellung x1c des Kranschubarms 6 und der dritte Hydraulikdruck p1c gemessen und im Speicher 8 der Steuerung 1 (nicht dargestellt) abgelegt. Die Steuerung 1 weist dazu einen zweiten Betriebsmodus zur zweiten Erfassung der momentan auf die Hebevorrichtung 2 wirkenden Kräfte und der momentanen Geometrie der Hebevorrichtung 2 auf.

In einer Vergleichsphase, in welcher sich die Steuerung 1 in einem dritten Betriebsmodus befindet, erfolgt nun eine Charakterisierung der angehobenen Last 21 durch einen Vergleich der jeweiligen erfassten momentan auf die Hebevorrichtung 2 wirkenden Kräfte und der jeweiligen erfassten momentanen Geometrie der Hebevorrichtung 2. Die Erfassung der momentan auf die Hebevorrichtung 2 wirkenden Kräfte und der momentanen Geometrie der Hebevorrichtung erfolgt allgemein vorteilhaft jeweils unter Einbeziehung von für die jeweilige Stellung der Hebevorrichtung 2 und den jeweiligen Belastungszustand der Hebevorrichtung 2 charakteristischen Parametern (beispielsweise Drücke, Schubstellungen, Knickwinkel und eventuelle Zusatzdaten zur Konfiguration) und einem im Speicher 8 der Steuerung 1 hinterlegten Berechnungsmodell.

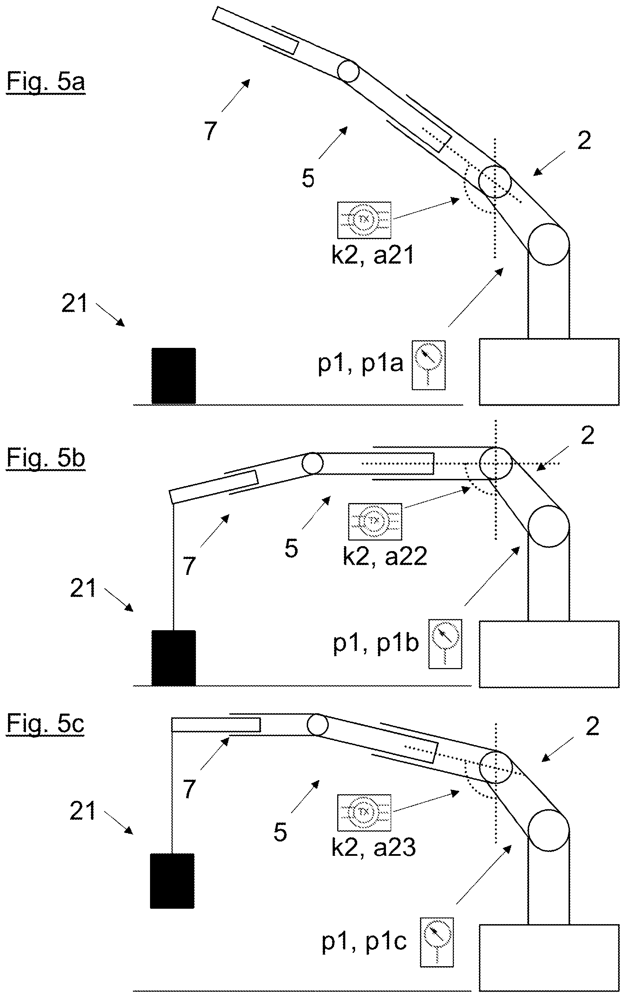

In den Figuren 5a bis 5c ist ein weiterer Ablauf einer Lastaufnahme (bzw. in umgekehrter Reihenfolge der Ablauf einer Lastabgabe) durch die Hebevorrichtung 2 gezeigt. Die Lastaufnahme der Last 21 durch die Hebevorrichtung 2 erfolgt wie dargestellt durch ein Verschwenken des Knickarms 5 relativ zum Hauptarm 4. Von den für den Belastungszustand der Hebevorrichtung 2 charakteristischen Parametern werden im dargestellten Verlauf der Lastaufnahme lediglich der vom Knickwinkelsensor k2 gemessene Knickwinkel des Knickarms 5 und der vom Drucksensor p1 gemessene Hydraulikdruck im Hauptzylinder 15 betrachtet.

In der in Figur 5a gezeigten Referenzstellung werden die erste Knickwinkelstellung a21 des Knickarms 5 und der erste Hydraulikdruck p1a gemessen und im Speicher 8 der Steuerung 1 (nicht dargestellt) abgelegt (Referenzphase, Steuerung 1 im ersten Betriebsmodus). Durch eine Geometrieänderung, hier ein Verschwenken des Knickarms 5, wird die Hebevorrichtung 2 in die in Figur 5b gezeigte Zwischenstellung gebracht. In der Zwischenstellung wird die zweite Knickwinkelstellung a22 des Knickarms 5 und der zweite Hydraulikdruck p1b gemessen und ebenfalls im Speicher 8 der Steuerung 1 (nicht dargestellt) abgelegt. Wie zuvor kann auch hier die in Figur 5b gezeigte Stellung der Hebevorrichtung 2 als Referenzstellung dienen. Durch eine weitere Geometrieänderung, hier wieder ein Verschwenken des Knickarms 5, wird die Hebevorrichtung 2 in die in Figur 5c gezeigte Messstellung gebracht, wodurch auch ein Anheben der Last 21 erfolgt. In der Messstellung werden nun die dritte Knickwinkelstellung a23 des Knickarms 5 und der dritte Hydraulikdruck p1c gemessen und im Speicher 8 der Steuerung 1 (nicht dargestellt) abgelegt (Messphase Steuerung 1 im zweiten Betriebsmodus). In der darauffolgenden Vergleichsphase (Steuerung 1 im dritten Betriebsmodus) kann wiederum durch die Steuerung 1 die angehobene Last 21 charakterisiert werden.

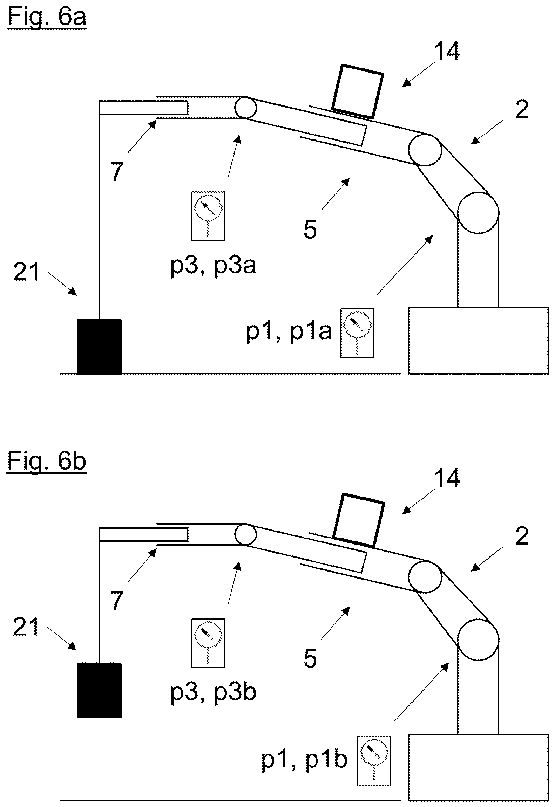

In den Figuren 6a und 6b ist ein weiterer Ablauf einer Lastaufnahme (bzw. in umgekehrter Reihenfolge der Ablauf einer Lastabgabe) durch die Hebevorrichtung 2 gezeigt, wobei die Hebevorrichtung ein am Knickarm 5 angeordnetes zusätzliches Arbeitsgerät 14 in Form einer Seilwinde aufweist. Die Lastaufnahme der Last 21 durch die Hebevorrichtung 2 erfolgt mittels des Arbeitsgeräts 14 in Form einer Seilwinde. Von den für den Belastungszustand der Hebevorrichtung 2 charakteristischen Parametern werden im dargestellten Verlauf der Lastaufnahme lediglich der vom Drucksensor p1 gemessene Hydraulikdruck im Hauptzylinder 15 und der vom Drucksensor p3 gemessene Hydraulikdruck im Knickzylinder 17 betrachtet. In Figur 6a befindet sich die Hebevorrichtung 2 in der Referenzstellung, welche bereits zur Lastaufnahme geeignet ist. In Figur 6b befindet sich die Hebevorrichtung 2 nach erfolgter Lastaufnahme in der Messstellung, wobei diese im dargestellten Fall im Wesentlichen der Referenzstellung entspricht. Durch einen Vergleich der in der Referenzphase aufgezeichneten Drücke p1a, p3a und der in der Messphase aufgezeichneten p1b, p3b kann (bei hinreichend bestimmter Geometrie) auf die Belastungsänderung der Hebevorrichtung 2 geschlossen werden und so die angehobene Last 21 charakterisiert werden.

Grundsätzlich ist durch das zuvor beschriebene Verfahren die Bestimmung einer angehobenen oder anzuhebenden Last durch die Hebevorrichtung 2 in einer beliebigen Kombination von Geometrieänderungen - insbesondere in einer beliebigen Kombination der in den diskutierten Figuren gezeigten Geometrieänderungen - möglich.

In den Figuren 4,5 und 6 versteht es sich jeweils von selbst, dass die für die gezeigten Stellungen der Hebevorrichtung 2 jeweils eine Erfassung der momentanen Geometrie - also speziell eine Erfassung der für die momentane Geometrie relevanten charakteristischen Parameter (beispielsweise Drehwinkel, Knickwinkel und Schubstellungen) - erfolgt. Bei den Ausführungen der Hebevorrichtung 2 mit einem Vorsatzknickarm 7 (häufig als Jib bezeichnet) können auch die für diesen Vorsatzknickarm 7 erfassten charakteristischen Parameter für die Bestimmung der angehobenen oder anzuhebenden Last 21 mit einbezogen werden.

In den Figuren 7a und 7b ist jeweils eine schematische Ausführung einer Hebevorrichtung 2 mit daran angeordneten, händisch betätigbaren, statischen Auslegerverlängerungen 13 gezeigt.

In der in Figur 7a gezeigten Ausführung sind die Auslegerverlängerungen 13 am Knickarm 5 angeordnet. Die Auslegerverlängerungen 13 können dabei schwenkbar am Knickarm 5 angeordnet sein, wobei der Knickwinkel der Auslegerverlängerungen 13 mittels eines Knickwinkelsensors k3 erfasst werden kann. Informationen zur zusätzlichen Auslagerung der Auslegerverlängerungen 13 können im Speicher 8 der Steuerung 1 hinterlegt sein und in die Bestimmung einer anzuhebenden oder angehobenen Last 21 mit einbezogen werden. In Figur 7a ist zudem mit strichlierten Linien angedeutet jeweils der Toleranzbereich für die Schubstellungsänderung des Knickarms 5 sowie der Knickwinkeländerung der Auslegerverlängerungen 13 dargestellt.

In der in Figur 7b gezeigten Ausführung sind die Auslegerverlängerungen 13 an einem am Knickarm 5 angeordneten Vorsatzknickarm 7 angeordnet. Die Auslegerverlängerungen 13 können dabei schwenkbar am Vorsatzknickarm 7 angeordnet sein, wobei der Knickwinkel der Auslegerverlängerungen 13 mittels eines Knickwinkelsensors k4 erfasst werden kann. In Figur 7b ist ebenfalls mit strichlierten Linien angedeutet jeweils der Toleranzbereich für die Schubstellungsänderung des Knickarms 5, des Vorsatzknickarms 7 sowie der Knickwinkeländerung der Auslegerverlängerungen 13 dargestellt.

In einer besonders vorteilhaften Ausführung der Hebevorrichtung 2 kann der Toleranzbereich im Wesentlichen den gesamten Bewegungsbereich der Hebevorrichtung 2 umfassen.

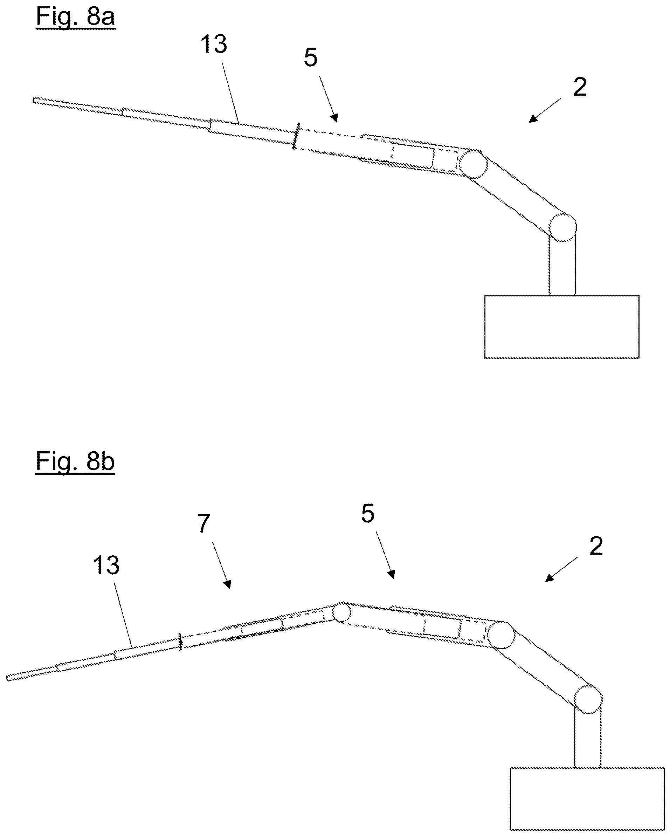

In den Figuren 8a und 8b ist eine zu den Figuren 7a und 7b analoge Ausführung der Hebevorrichtung 2 gezeigt, wobei jedoch die Auslegerverlängerungen 13 unter einem vorgegebenen, nicht veränderlichen Knickwinkel am Knickarm 5 bzw. am Vorsatzknickarm 7 angebracht sind.

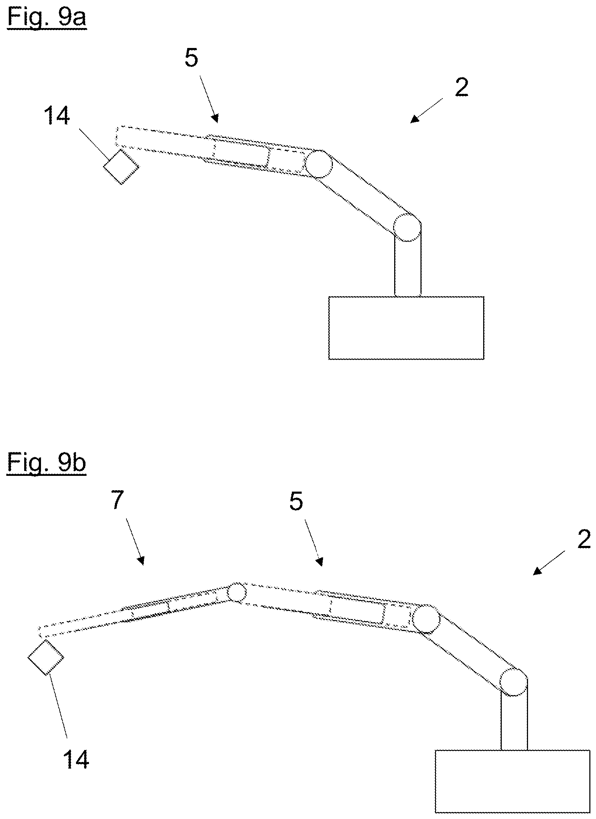

In den Figuren 9a und 9b ist jeweils eine Ausführung der Hebevorrichtung 2 mit daran angeordnetem Arbeitsgerät 14, beispielsweise in Form eines Greifers, gezeigt. In Figur 9a ist das Arbeitsgerät 14 am Knickarm 5 angeordnet und in Figur 9b ist das Arbeitsgerät 14 am Vorsatzknickarm 7 angeordnet. Gegebenenfalls kann eine Winkelstellung des Arbeitsgerät 14 zum dieses tragenden Kranarm erfasst und bei Bestimmung einer angehobenen Last 21 mit berücksichtigt werden. Da bei dem zuvor beschriebenen Verfahren in der Referenzphase sowie in der Messphase die durch das Arbeitsgerät 14 bedingte Belastung der Hebevorrichtung 2 erfasst wird, kann diese im Berechnungsmodell einbezogen werden.

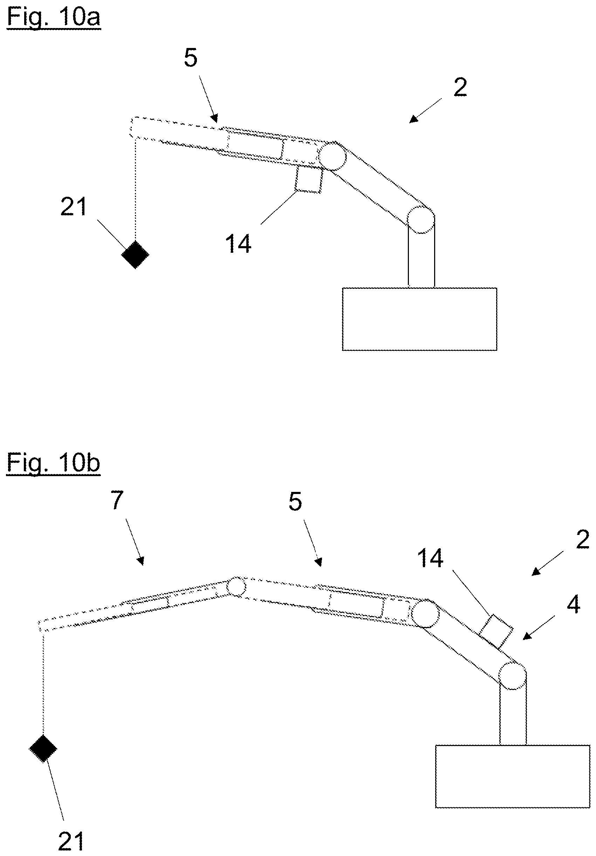

In den Figuren 10a und 10b ist jeweils eine Ausführung der Hebevorrichtung 2 mit daran angeordnetem Arbeitsgerät 14, hier in Form einer Seilwinde, und einer von der Hebevorrichtung 2 angehobenen Last 21 gezeigt. In Figur 10a ist das Arbeitsgerät 14 am Knickarm 5 angeordnet und in Figur 10b ist das Arbeitsgerät 14 am Hauptarm 4 angeordnet. Da bei dem zuvor beschriebenen Verfahren in der Referenzphase sowie in der Messphase die durch das Arbeitsgerät 14 bedingte Belastung der Hebevorrichtung 2 erfasst wird, im Wesentlichen unabhängig von dessen Position an der Hebevorrichtung 2, kann diese im Berechnungsmodell einbezogen werden.

Die Funktionalität der Bestimmung einer von der Hebevorrichtung 2 angehobenen oder anzuhebenden Last 21 ist somit nicht durch die Ausstattung bzw. Konfiguration der Hebevorrichtung 2 limitiert.

### Bezugszeichenliste:

- 1: Steuerung
- 2: Hebevorrichtung
- 3: Kransäule
- 4: Hauptarm
- a1, a2, a3, a4: Knickwinkel
- 5: Knickarm
- 6: Kranschubarm
- 7: Vorsatzknickarm
- s1, s2: Schubstellungssensor
- x1a, x2b, x3c: Schubstellungen
- p1, p2, p3: Drucksensoren
- p1a, p1b, p1c: Drücke
- p3a, p3b: Drücke
- 8: Speicher
- 9: Recheneinheit
- k1, k2, k3, k4: Knickwinkelsensor
- d1: Drehwinkelsensor
- a21, a22, a23: Knickwinkel
- d1a: Drehwinkel
- 10: Kranarm
- 11: Kranschubarm
- 12: Vorsatzknickarm
- 13: Auslegerverlängerung
- 14: Arbeitsgerät
- 15: Hauptzylinder
- 16, 17, 20: Knickzylinder
- 18: Drehwerk
- 19: Fahrzeug
- 22: Anzeige
- h1, h2, h3: horizontale Schwenkachse
- v1: vertikale Schwenkachse
- 21: Last

## Patentansprüche

1. Verfahren zur Bestimmung einer von einer hydraulischen Hebevorrichtung (2), vorzugsweise einem hydraulischen Ladekran, angehobenen oder anzuhebenden Last (21), wobei die Hebevorrichtung (2) für die Bestimmung der angehobenen oder anzuhebenden Last (21) in einer Referenzphase in einem ersten Belastungszustand der Hebevorrichtung (2) in eine Referenzstellung gebracht wird, **dadurch gekennzeichnet, dass**
- in der Referenzstellung eine erste Erfassung der momentan auf die Hebevorrichtung (2) wirkenden Kräfte und der momentanen Geometrie der Hebevorrichtung (2) erfolgt, wobei die Referenzstellung einer frei wählbaren Stellung der Hebevorrichtung (2) entspricht,
- in einer Messphase die Hebevorrichtung (2) in einem zweiten Belastungszustand in eine Messstellung gebracht wird und in der Messstellung eine zweite Erfassung der momentan auf die Hebevorrichtung (2) wirkenden Kräfte und der momentanen Geometrie der Hebevorrichtung (2) erfolgt, und
- in einer Vergleichsphase durch einen Vergleich der jeweiligen erfassten momentan auf die Hebevorrichtung (2) wirkenden Kräfte und der jeweiligen erfassten momentanen Geometrie der Hebevorrichtung die angehobene Last (21) charakterisiert wird.

2. Verfahren nach Anspruch 1, wobei die Messstellung einer Stellung der Hebevorrichtung (2) nach einer Lastaufnahme oder einer Lastabgabe entspricht und/oder einer an die Referenzstellung der Hebevorrichtung (2) angenäherten Stellung der Hebevorrichtung (2) entspricht und/oder im Wesentlichen der Referenzstellung entspricht.

3. Verfahren nach zumindest einem der vorangehenden Ansprüche, wobei die Referenzstellung einer an eine Zwischenstellung angenäherten Stellung entspricht, wobei die Zwischenstellung eine zur Lastaufnahme oder Lastabgabe geeignete Stellung der Hebevorrichtung (2) ist und wobei bevorzugt vorgesehen ist, dass die Überführung der Hebevorrichtung (2) aus der Referenzstellung in die Zwischenstellung und die Überführung der Hebevorrichtung (2) aus der Zwischenstellung in die Messstellung mit einer innerhalb eines Toleranzbereichs liegenden Stellungsänderung der Hebevorrichtung (2) erfolgt.

4. Verfahren nach zumindest einem der vorangehenden Ansprüche, wobei vor jeder Durchführung der Messphase zur Erfassung der im zweiten Belastungszustand momentan auf die Hebevorrichtung (2) wirkenden Kräfte und der momentanen Geometrie der Hebevorrichtung (2) eine Durchführung der Referenzphase zur Erfassung der im ersten Belastungszustand momentan auf die Hebevorrichtung (2) wirkenden Kräfte und der momentanen Geometrie der Hebevorrichtung (2) erfolgt.

5. Verfahren nach zumindest einem der vorangehenden Ansprüche, wobei die Erfassung der momentan auf die Hebevorrichtung (2) wirkenden Kräfte und der momentanen Geometrie der Hebevorrichtung (2) unter Einbeziehung von für die jeweilige Stellung der Hebevorrichtung (2) und den jeweiligen Belastungszustand der Hebevorrichtung (2) charakteristischen Parametern und einem Berechnungsmodell erfolgt.

6. Verfahren nach zumindest einem der vorangehenden Ansprüche, wobei die Hebevorrichtung (2) zumindest eine um eine vertikale Drehachse (v1) drehbare Kransäule und einen um eine erste horizontale Schwenkachse (h1) schwenkbar an der Kransäule (3) gelagerten Hauptarm (4) aufweist, wobei die Hebevorrichtung (2) weiter zumindest einen hydraulischen Hauptzylinder (15) zum Verschwenken des Hauptarms (4) aufweist, wobei in der Referenzphase und der Messphase das Moment bezüglich der ersten horizontalen Schwenkachse (h1) erfasst wird.

7. Verfahren nach dem vorangehenden Anspruch, wobei die Hebevorrichtung (2) ein Drehwerk (18) zur Drehung der Kransäule (3) und einen um eine zweite horizontale Drehachse (h2) schwenkbar am Hauptarm (4) gelagerten Knickarm (5) mit vorzugsweise zumindest einem Kranschubarm (6) aufweist, wobei die Hebevorrichtung (2) weiter einen ersten hydraulischen Knickzylinder (16) zum Verschwenken des Knickarms (5) und vorzugsweise zumindest einen ersten hydraulischen Schubzylinder zur Betätigung des zumindest einen Kranschubarms (6) aufweist.

8. Verfahren nach den Ansprüchen 5 und einen der Ansprüche 6 oder 7, wobei die charakteristischen Parameter zumindest den Druck in dem zumindest einen Hauptzylinder (15) und/oder den Druck im Knickzylinder (16) und/oder den Drehwinkel des Drehwerks (18) und/oder den Knickwinkel (a1) des Hauptarms (4) zur Kransäule (3) und/oder den Knickwinkel (a2) des Knickarms (5) zum Hauptarm (4) und/oder die Schubstellung des zumindest einen Kranschubarms (6) umfassen.

9. Verfahren nach zumindest einem der Ansprüche 5 bis 8, wobei die Hebevorrichtung (2) weiter einen um eine dritte horizontale Schwenkachse (h3) schwenkbar am Knickarm (5) gelagerten Vorsatzknickarm (7) mit zumindest einem Kranschubarm (11) aufweist, wobei die Hebevorrichtung (2) weiter zumindest einen zweiten hydraulischen Knickzylinder (17) zum Verschwenken des Vorsatzknickarms (7) aufweist und die charakteristischen Parameter weiter den Druck im zweiten Knickzylinder (17) und/oder den Knickwinkel (a3) des Vorsatzknickarms (7) zum Knickarm (5) und/oder die Schubstellung des zumindest einen Kranschubarms (11) des Vorsatzknickarms (7) umfassen, wobei in der Referenzphase und der Messphase das Moment bezüglich der ersten horizontalen Schwenkachse (h1) und das Moment bezüglich der dritten horizontalen Schwenkachse (h3) erfasst werden.

10. Verfahren nach dem vorangehenden Anspruch, wobei die Hebevorrichtung (2) weiter zumindest eine - vorzugsweise unter einem vorgebbaren Winkel - an einem Kranschubarm (6, 11) angeordnete Auslegerverlängerung (13) aufweist und in dem Berechnungsmodell die zusätzliche Auslagerung der zumindest einen Auslegerverlängerung (13) einbezogen wird.

11. Verfahren nach zumindest einem der vorangehenden Ansprüche 5 bis 10, wobei die Hebevorrichtung (2) weiter zumindest ein an der Hebevorrichtung (2), insbesondere an einem Kranschubarm (6, 11), angeordnetes Arbeitsgerät (14) aufweist und in dem Berechnungsmodell die zusätzliche durch das Arbeitsgerät (14) bedingte Belastung einbezogen wird.

12. Verfahren nach zumindest einem der vorangehenden Ansprüche 6 bis 11, wobei in dem Berechnungsmodell die Verformung der Hebevorrichtung (2) einbezogen wird.

13. Verfahren nach dem vorangehenden Anspruch und zumindest einem der Ansprüche 6 bis 12, wobei in dem Berechnungsmodell die Verformung der Kransäule (3) und/ oder des Hauptarms (4) und/oder des Knickarms (5) und/oder des Vorsatzknickarms (7) und/oder des zumindest einen Kranschubarms (6, 11) der Hebevorrichtung (2) und/oder der zumindest einen Auslegerverlängerung (13), und/oder der Einfluss von Dichtungsreibungen der hydraulischen Zylinder (15, 16, 17, 20) einbezogen werden.

14. Verfahren nach dem vorangehenden Anspruch, wobei in dem Berechnungsmodell die Verformung in Form einer Korrektur auf erfasste Knickwinkel und/oder in Form einer Korrektur auf erfasste Schubstellungen angewandt wird, und/oder der Einfluss der Dichtungsreibungen in Form einer Korrektur auf erfasste Drücke angewandt wird, wobei vorzugsweise die Korrektur in Abhängigkeit der erfassten momentan auf die Hebevorrichtung (2) wirkenden Kräfte und/oder erfasste Knickwinkel und/oder der erfassten Schubstellungen erfolgt, und/oder vorzugsweise die Korrektur für die Verformung in linearer Abhängigkeit des erfassten Drucks und/oder in linearer Abhängigkeit der erfassten Schubstellung erfolgt und/oder die Korrektur für die Dichtungsreibungen invers proportional zum erfassten Druck und in Abhängigkeit einer Richtung einer Stellungsänderung erfolgt.

15. Verfahren nach zumindest einem der vorangehenden Ansprüche, wobei der erste Belastungszustand einem Belastungszustand ohne eine von der Hebevorrichtung (2) angehobene Last (21) und der zweite Belastungszustand einem Belastungszustand mit angehobener Last (21) entspricht oder der erste Belastungszustand einem Belastungszustand mit einer ersten von Hebevorrichtung (2) angehobenen Last (21) und der zweite Belastungszustand einem Belastungszustand mit einer zweiten, vorzugsweise von der ersten abweichenden, angehobenen Last (21) entspricht.

16. Hydraulische Hebevorrichtung (2) - bevorzugt Ladekran für ein Fahrzeug (19), besonders bevorzugt Knickarmkran - mit einer Steuerung (1), die zur Durchführung eines Verfahrens nach zumindest einem der vorangehenden Ansprüche zur Bestimmung einer angehobenen oder anzuhebenden Last ausgebildet ist, wobei von der Steuerung (1)
- in einem ersten Betriebsmodus die Referenzphase in einem ersten Belastungszustand in der Referenzstellung der Hebevorrichtung (2) zur ersten Erfassung der momentan auf die Hebevorrichtung (2) wirkenden Kräfte und der momentanen Geometrie der Hebevorrichtung (2) durchführbar ist, wobei die Referenzstellung einer frei wählbaren Stellung der Hebevorrichtung (2) entspricht,
- in einem zweiten Betriebsmodus die Messphase in einem zweiten Belastungszustand in der Messstellung der Hebevorrichtung (2) zur zweiten Erfassung der momentan auf die Hebevorrichtung (2) wirkenden Kräfte und der momentanen Geometrie der Hebevorrichtung (2) durchführbar ist und
- in einem dritten Betriebsmodus die Vergleichsphase zur Charakterisierung der angehobenen Last (21) durch einen Vergleich der jeweiligen erfassten momentan auf die Hebevorrichtung (2) wirkenden Kräfte und der jeweiligen erfassten momentanen Geometrie der Hebevorrichtung (2) durchführbar ist, wobei vorzugsweise die in der Vergleichsphase charakterisierte Last (21) in mit der Last (21) korrespondierenden Einheiten an einer mit der Steuerung kommunizierenden Anzeige anzeigbar ist.

## Claims

1. A method for determining a load (21) which is lifted or is to be lifted by a hydraulic lifting apparatus (2), preferably a hydraulic loading crane, wherein the lifting apparatus (2) for determining the load (21) which is lifted or is to be lifted is moved into a reference position in a reference phase in a first loading state of the lifting apparatus (2), **characterised in that**
- in the reference position a first detection of the forces currently acting on the lifting apparatus (2) and the current geometry of the lifting apparatus (2) is effected, wherein the reference position corresponds to a freely selectable position of the lifting apparatus (2),
- in a measurement phase the lifting apparatus (2) is moved into a measurement position in a second loading state and in the measurement position a second detection of the forces currently acting on the lifting apparatus (2) and the current geometry of the lifting apparatus (2) is effected, and
- in a comparison phase the lifted load (21) is **characterised by** a comparison of the respective detected forces currently acting on the lifting apparatus (2) and the respective detected current geometry of the lifting apparatus.

2. The method according to claim 1 wherein the measurement position corresponds to a position of the lifting apparatus (2) after a load pickup or a load setdown and/or corresponds to a position of the lifting apparatus (2), approximated to the reference position of the lifting apparatus (2) and/or substantially corresponds to the reference position.

3. The method according to at least one of the preceding claims wherein the reference position corresponds to a position approximated to an intermediate position, wherein the intermediate position is a position of the lifting apparatus (2), that is suitable for load pickup or load setdown, and wherein it is preferably provided that the transfer of the lifting apparatus (2) out of the reference position into the intermediate position and the transfer of the lifting apparatus (2) out of the intermediate position into the measurement position is effected with a change in position of the lifting apparatus (2) being within a tolerance range.

4. The method according to at least one of the preceding claims wherein prior to each implementation of the measurement phase for detecting the forces currently acting on the lifting apparatus (2) in the second loading state and the current geometry of the lifting apparatus (2) an implementation of the reference phase is effected for detecting the forces currently acting on the lifting apparatus (2) in the first loading state and the current geometry of the lifting apparatus (2).

5. The method according to at least one of the preceding claims wherein detecting the forces currently acting on the lifting apparatus (2) and the current geometry of the lifting apparatus (2) is effected with involvement of parameters characteristic of the respective position of the lifting apparatus (2) and the respective loading state of the lifting apparatus (2), and a calculation model.

6. The method according to at least one of the preceding claims wherein the lifting apparatus (2) has at least one crane column rotatable about a vertical axis of rotation (v1) and a main arm (4) mounted pivotably about a first horizontal pivot axis (h1) to the crane column (3), wherein the lifting apparatus (2) further has at least one hydraulic main cylinder (15) for the pivotal movement of the main arm (4), wherein in the reference phase and the measurement phase the moment is detected in relation to the first horizontal pivot axis (h1).

7. The method according to the preceding claim wherein the lifting apparatus (2) has a rotary mechanism (18) for rotating the crane column (3) and an articulated arm (5) mounted pivotably about a second horizontal axis of rotation (h2) to the main arm (4) pivotably about a second horizontal axis of rotation (h2) and with preferably at least one crane extension arm (6), wherein the lifting apparatus (2) further has a first hydraulic articulation cylinder (16) for the pivotal movement of the articulated arm (5) and preferably at least one first hydraulic extension cylinder for actuation of the at least one crane extension arm (6).

8. The method according to claims 5 and one of claims 6 or 7 wherein the characteristic parameters include at least the pressure in the at least one main cylinder (15) and/or the pressure in the articulation cylinder (16) and/or the rotary angle of the rotary mechanism (18) and/or the articulation angle (a1) of the main arm (4) relative to the crane column (3) and/or the articulation angle (a2) of the articulated arm (5) relative to the main arm (4) and/or the extension position of the at least one crane extension arm (6).

9. The method according to at least one of claims 5 to 8 wherein the lifting apparatus (2) further has an attachment articulated arm (7) mounted pivotably about a third horizontal pivot axis (h3) to the articulated arm (5) and having at least one crane extension arm (11), wherein the lifting apparatus (2) further has at least one second hydraulic articulation cylinder (17) for the pivotal movement of the attachment articulated arm (7) and the characteristic parameters further include the pressure in the second articulation cylinder (17) and/or the articulation angle (a3) of the attachment articulated arm (7) relative to the articulated arm (5) and/or the extension position of the at least one crane extension arm (11) of the attachment articulated arm (7), wherein in the reference phase and the measurement phase the moment in relation to the first horizontal pivot axis (h1) and the moment in relation to the third horizontal pivot axis (h3) is detected.

10. The method according to the preceding claim wherein the lifting apparatus (2) further has at least one fly jib (13) arranged on a crane extension arm (6, 11) - preferably at a predeterminable angle - and the additional displacement of the at least one fly jib (13) is incorporated in the calculation model.

11. The method according to at least one of preceding claims 5 to 10 wherein the lifting apparatus (2) further has a working device (14) arranged on the lifting apparatus (2), in particular on a crane extension arm (6, 11), and the additional loading due to the working device (14) is incorporated in the calculation model.

12. The method according to at least one of preceding claims 6 to 11 wherein the deformation of the lifting apparatus (2) is incorporated in the calculation model.

13. The method according to the preceding claim and at least one of claims 6 to 12 wherein the deformation of the crane column (3) and/or the main arm (4) and/or the articulated arm (5) and/or the attachment articulated arm (7) and/or the at least one crane extension arm (6, 11), of the lifting apparatus (2) and/or the at least one fly jib (13) and/or the influence of seal frictions of the hydraulic cylinders (15, 16, 17, 20) are incorporated in the calculation model.

14. The method according to the preceding claim wherein in the calculation model the deformation in the form of a correction to detected articulation angles and/or in the form of a correction to detected extension positions is applied, and/or the influence of the seal frictions is applied in the form of a correction to detected pressures, wherein preferably the correction is effected in dependence on the detected forces currently acting on the lifting apparatus (2) and/or detected articulation angles and/or the detected extension positions, and/or preferably the correction for the deformation is effected in linear dependency in respect of the detected pressure and/or in linear dependency in respect of the detected extension position and/or the correction for the seal frictions is effected inversely proportionally to the detected pressure and in dependence on a direction of a change in position.

15. The method according to at least one of the preceding claims wherein the first loading state corresponds to a loading state without a load (21) lifted by the lifting apparatus (2) and the second loading state corresponds to a loading state with a lifted load (21), or the first loading state corresponds to a loading state with a first load (21) lifted by the lifting apparatus (2) and the second loading state corresponds to a loading state with a second lifted load (21) preferably differing from the first.

16. A hydraulic lifting apparatus (2) - preferably a loading crane for a vehicle (19), particularly preferably an articulated arm crane - having a control means (1) which is adapted for carrying out a method according to at least one of the preceding claims for determining a load which is lifted or is to be lifted, wherein by the control means (1)
- in a first operating mode the reference phase can be carried out in a first loading state in the reference position of the lifting apparatus (2) for the first detection of the forces currently acting on the lifting apparatus (2) and the current geometry of the lifting apparatus (2), wherein the reference position corresponds to a freely selectable position of the lifting apparatus (2),
- in a second operating mode the measurement phase can be carried out in a second loading state in the measurement position of the lifting apparatus (2) for the second detection of the forces currently acting on the lifting apparatus (2) and the current geometry of the lifting apparatus (2), and
- in a third operating mode the comparison phase can be carried out for characterising the lifted load (21) by a comparison of the respective detected forces currently acting on the lifting apparatus (2) and the respective detected current geometry of the lifting apparatus (2), wherein preferably the load (21) **characterised in** the comparison phase can be displayed at a display means communicating with the control means in units corresponding to the load (21).

## Revendications

1. Procédé de détermination d'une charge (21) soulevée ou à soulever par un dispositif de levage hydraulique (2), de préférence une grue de chargement hydraulique, dans lequel le dispositif de levage (2) est amené dans une position de référence pour la détermination de la charge (21) soulevée ou à soulever dans une phase de référence dans un premier état de charge du dispositif de levage (2), **caractérisé en ce que**
- une première détection des forces agissant momentanément sur le dispositif de levage (2) et de la géométrie momentanée du dispositif de levage (2) est effectuée dans la position de référence, dans lequel la position de référence correspond à une position pouvant être librement choisie du dispositif de levage (2),
- dans une phase de mesure, le dispositif de levage (2) est amené dans un deuxième état de charge dans une position de mesure et une deuxième détection des forces agissant momentanément sur le dispositif de levage (2) et de la géométrie momentanée du dispositif de levage (2) est effectuée dans la position de mesure, et
- la charge (21) soulevée est caractérisée dans une phase de comparaison par une comparaison des forces agissant momentanément sur le dispositif de levage (2) respectivement détectées et de la géométrie momentanée respectivement détectée du dispositif de levage.

2. Procédé selon la revendication 1, dans lequel la position de mesure correspond à une position du dispositif de levage (2) après une réception de charge ou une transmission de charge et/ou correspond à une position du dispositif de levage (2) rapprochée de la position de référence du dispositif de levage (2) et/ou correspond sensiblement à la position de référence.

3. Procédé selon au moins l'une quelconque des revendications précédentes, dans lequel la position de référence correspond à une position rapprochée d'une position intermédiaire, dans lequel la position intermédiaire est une position du dispositif de levage (2) adaptée à la réception de charge ou à la transmission de charge et dans lequel il est prévu de manière préférée que le transfert du dispositif de levage (2) de la position de référence dans la position intermédiaire et le transfert du dispositif de levage (2) de la position intermédiaire dans la position de mesure sont effectués avec un changement de position du dispositif de levage (2) se trouvant dans une plage de tolérance.

4. Procédé selon au moins l'une quelconque des revendications précédentes, dans lequel, avant chaque mise en œuvre de la phase de mesure pour la détection des forces agissant momentanément sur le dispositif de levage (2) dans le deuxième état de charge et de la géométrie momentanée du dispositif de levage (2), une mise en œuvre de la phase de référence pour la détection des forces agissant momentanément sur le dispositif de levage (2) dans le premier état de charge et de la géométrie momentanée du dispositif de levage (2) est effectuée.

5. Procédé selon au moins l'une quelconque des revendications précédentes, dans lequel la détection des forces agissant momentanément sur le dispositif de levage (2) et de la géométrie momentanée du dispositif de levage (2) est effectuée en tenant compte de paramètres caractéristiques de la position respective du dispositif de levage (2) et l'état de charge respectif du dispositif de levage (2) et d'un modèle de calcul.

6. Procédé selon au moins l'une quelconque des revendications précédentes, dans lequel le dispositif de levage (2) présente au moins une colonne de grue pouvant tourner autour d'un axe de rotation vertical (v1) et un bras principal (4) monté sur la colonne de grue (3) de manière à pouvoir pivoter autour d'un premier axe de pivotement horizontal (h1), dans lequel le dispositif de levage (2) présente par ailleurs au moins un vérin principal hydraulique (15) pour le pivotement du bras principal (4), dans lequel, dans la phase de référence et la phase de mesure, le couple est détecté par rapport au premier axe de pivotement horizontal (h1).

7. Procédé selon la revendication précédente, dans lequel le dispositif de levage (2) présente un mécanisme de rotation (18) pour la rotation de la colonne de grue (3) et un bras articulé (5) monté sur le bas principal (4) de manière à pouvoir pivoter autour d'un deuxième axe de rotation horizontal (h2) avec de préférence au moins un bras de poussée de grue (6), dans lequel le dispositif de levage (2) présente par ailleurs un premier vérin hydraulique articulé (16) pour le pivotement du bras articulé (5) et de préférence au moins un premier vérin de poussée hydraulique pour l'actionnement de l'au moins un bras de poussée de grue (6).

8. Procédé selon la revendication 5 et l'une quelconque des revendications 6 ou 7, dans lequel les paramètres caractéristiques comprennent au moins la pression dans l'au moins un vérin principal (15) et/ou la pression dans le vérin articulé (16) et/ou l'angle de rotation du mécanisme de rotation (18) et/ou l'angle d'articulation (a1) du bras principal (4) par rapport à la colonne de grue (3) et/ou l'angle d'articulation (a2) du bras articulé (5) par rapport au bras principal (4) et/ou la position de poussée de l'au moins un bras de poussée de grue (6).

9. Procédé selon au moins l'une quelconque des revendications 5 à 8, dans lequel le dispositif de levage (2) présente par ailleurs un bras articulé de rehausse (7) monté sur le bras articulé (5) de manière à pouvoir pivoter autour d'un troisième axe de pivotement horizontal (h3) avec au moins un bras de poussée de grue (11), dans lequel le dispositif de levage (2) présente par ailleurs au moins un deuxième vérin articulé hydraulique (17) pour le pivotement du bras articulé de rehausse (7) et les paramètres caractéristiques comprennent par ailleurs la pression dans le deuxième vérin articulé (17) et/ou l'angle d'articulation (a3) du bras articulé de rehausse (7) par rapport au bras articulé (5) et/ou la position de poussée de l'au moins un bras de poussée de grue (11) du bras articulé de rehausse (7), dans lequel le couple par rapport au premier axe de pivotement horizontal (h1) et le couple par rapport au troisième axe de pivotement horizontal (h3) sont détectés dans la phase de référence et dans la phase de mesure.

10. Procédé selon la revendication précédente, dans lequel le dispositif de levage (2) présente par ailleurs au moins une rallonge de flèche (13) disposée - de préférence selon un angle pouvant être spécifié - sur un bras de poussée de grue (6, 11) et le déport supplémentaire de l'au moins une rallonge de flèche (13) est intégré dans le modèle de calcul.

11. Procédé selon au moins l'une quelconque des revendications précédentes 5 à 10, dans lequel le dispositif de levage (2) présente par ailleurs au moins un appareil de travail (14) disposé sur le dispositif de levage (2), en particulier sur un bras de poussée de grue (6, 11) et la charge supplémentaire due à l'appareil de travail (14) est intégrée dans le modèle de calcul.

12. Procédé selon au moins l'une quelconque des revendications précédentes 6 à 11, dans lequel la déformation du dispositif de levage (2) est intégrée dans le modèle de calcul.

13. Procédé selon la revendication précédente et selon au moins l'une quelconque des revendications 6 à 12, dans lequel le modèle de calcul intègre la déformation de la colonne de grue (3) et/ou du bras principal (4) et/ou du bras articulé (5) et/ou du bras articulé de rehausse (7) et/ou de l'au moins un bras de poussée de grue (6, 11) du dispositif de levage (2) et/ou de l'au moins une rallonge de flèche (13), et/ou l'incidence de frottements de joint d'étanchéité des vérins hydrauliques (15, 16, 17, 20).

14. Procédé selon la revendication précédente, dans lequel le modèle de calcul applique la déformation sous forme d'une correction sur des angles d'articulation détectés et/ou sous forme d'une correction sur des positions de poussée détectées, et/ou l'incidence des frottements de joint d'étanchéité sous forme d'une correction sur des pressions détectées, dans lequel de préférence la correction est effectuée en fonction des forces agissant momentanément sur le dispositif de levage (2) détectées et/ou des angles d'articulation détectés et/ou des positions de poussée détectées, et/ou de préférence la correction pour la déformation est effectuée en fonction linéairement de la pression détectée et/ou en fonction linéairement de la position de poussée détectée et/ou la correction pour les frottements de joint d'étanchéité est effectuée de manière inversement proportionnelle à la pression détectée et en fonction d'une direction d'un changement de position.

15. Procédé selon au moins l'une quelconque des revendications précédentes, dans lequel le premier état de charge correspond à un état de charge sans charge (21) soulevée par le dispositif de levage (2) et le deuxième état de charge correspond à un état de charge avec charge (21) soulevée ou le premier état de charge correspond à un état de charge avec une première charge (21) soulevée par le dispositif de levage (2) et le deuxième état de charge correspond à un état de charge avec une deuxième charge (21) soulevée, de préférence différente de la première.

16. Dispositif de levage hydraulique (2) - de manière préférée grue de chargement pour un véhicule (19), de manière particulièrement préférée grue à bras articulé - avec une commande (1) qui est réalisée pour mettre en œuvre un procédé selon au moins l'une quelconque des revendications précédentes de détermination d'une charge soulevée ou à soulever, dans lequel la commande (1)
- peut mettre en oeuvre, dans un premier mode de fonctionnement, la phase de référence dans un premier état de charge dans la position de référence du dispositif de levage (2) pour la première détection des forces agissant momentanément sur le dispositif de levage (2) et de la géométrie momentanée du dispositif de levage (2), dans lequel la position de référence correspond à une position pouvant être librement choisie du dispositif de levage (2),
- peut mettre en œuvre, dans un deuxième mode de fonctionnement, la phase de mesure dans un deuxième état de charge dans la position de mesure du dispositif de levage (2) pour la deuxième détection des forces agissant momentanément sur le dispositif de levage (2) et de la géométrie momentanée du dispositif de levage (2) et
- peut mettre en œuvre, dans un troisième mode de fonctionnement, la phase de comparaison permettant de caractériser la charge (21) soulevée par comparaison des forces agissant momentanément sur le dispositif de levage (2) respectivement détectées et de la géométrie momentanée respective détectée du dispositif de levage (2), dans lequel de préférence la charge (21) caractérisée dans la phase de comparaison peut être affichée en unités correspondant à la charge (21) sur un affichage communiquant avec la commande.
